# EUROPÄISCHE PATENTSCHRIFT

(11) **EP 2 662 261 B1**
(45) Veröffentlichungstag und Bekanntmachung des Hinweises auf die Patenterteilung: **05.09.2018**
(21) Anmeldenummer: 13166391.6
(22) Anmeldetag: 03.05.2013
(51) Int. Cl.: B62B 3/12, B62B 5/00

(54) **Fahrwerk mit Rollen zum Transportieren einer Last**
Rolling gear for transporting a load
Support à roulette pour déplacer une charge

(30) Priorität: 11.05.2012 DE 102012207857
(43) Veröffentlichungstag der Anmeldung: 13.11.2013
(73) Patentinhaber: Jung Hebe- und Transporttechnik GmbH, 71334 Waiblingen (DE)
(72) Erfinder: Gündogan, Birol, 71737 Kirchberg (DE)
(74) Vertreter: BRP Renaud & Partner mbB Rechtsanwälte Patentanwälte Steuerberater

(56) Entgegenhaltungen:
- EP-A1- 0 155 326
- EP-A2- 1 145 930
- DE-U- 1 915 796
- US-A- 4 127 202
- US-A1- 2004 064 915
- US-A1- 2007 193 073
- US-A1- 2011 304 109

## Beschreibung

Die vorliegende Erfindung betrifft ein Fahrwerk zum Transportieren einer Last sowie eine Anordnung aus zumindest zwei solchen Fahrwerken. Siehe hierzu auch da Dokument EP1145930. Fahrwerke zum Transportieren von Lasten werden vielfältig eingesetzt, vorzugsweise um Lasten mit einem hohen Gewicht, beispielsweise von einigen hundert kg bis mehreren Tonnen, zu tragen und zu transportieren. Ein derartiges Fahrwerk kann hierzu eine Trägerplatte umfassen, auf welche die zu transportierende Last aufgelegt bzw. aufgesetzt werden kann. Ferner ist es vorstellbar, ein derartiges Fahrwerk mit zumindest zwei Rollen auszustatten, die auf einer von der Last abgewandten Unterseite der Trägerplatte angeordnet sind und somit das Transportieren der Last durch Ziehen oder Drücken der Trägerplatte erlauben. Ein solches Fahrwerk kann beispielsweise vier solche Rollen aufweisen, die jeweils voneinander beabstandet an der Unterseite der Trägerplatte um eine zugehörige senkrecht zur Trägerplatte verlaufende Drehachse drehbar mit der Trägerplatte verbunden sind. Hierdurch wird zusätzlich ein Lenken des Fahrwerks ermöglicht. Problematisch hierbei ist jedoch, dass während des Transports der Last, das heißt während dem Schieben oder Ziehen des Fahrwerks, ein instabiler Zustand des Fahrwerks dahingehend entstehen kann, dass sich das Fahrwerk während des Transportes unkontrolliert und/oder unerwünscht um eine senkrecht zur Trägerplatte verlaufende Fahrwerkdrehachse dreht.

Die vorliegende Erfindung beschäftigt sich mit dem Problem, für ein Fahrwerk der eingangs genannten Art eine verbesserte oder zumindest andere Ausführungsform anzugeben, die sich insbesondere durch eine vereinfachte Handhabung und/oder durch ein stabileres Verhalten während des Transportes einer zu transportierenden Last auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein Fahrwerk zum Transportieren einer Last, das eine Trägerplatte umfasst, mit drei Rollen auszustatten, wobei die jeweiligen Rollen zueinander beabstandet angeordnet sind und zwei dieser Rollen relativ zur Trägerplatte drehbar sind, während die andere Rolle relativ zur Trägerplatte fixiert ist und lediglich entlang eines Untergrundes rollen kann. Hierbei bezieht sich die Drehbarkeit der jeweiligen, drehbar zur Trägerplatte angeordneten, Rolle, auf eine senkrecht zur Trägerplatte, insbesondere einer Erstreckungsebene der Trägerplatte, verlaufenden Drehachse. Somit wird insbesondere erreicht, dass sich die drehbaren Rollen während des Transportes der Last mit Hilfe des Fahrwerkes, das heißt insbesondere während einer Vorwärtsbewegung oder einer Rückwärtsbewegung des Fahrwerks, bedingt durch ihre Drehbarkeit relativ zur Trägerplatte, senkrecht zur Fahrtrichtung des Fahrwerks ausrichten, während die andere Rolle relativ zum Fahrwerk fixiert ist. Damit wird eine Möglichkeit geschaffen, das Fahrwerk in eine beliebige Richtung zu drehen und somit zu lenken, was insbesondere eine vereinfachte Handhabung des Fahrwerks zur Folge hat.

Dem Erfindungsgedanken entsprechend umfasst das Fahrwerk die Trägerplatte, welche sich in der Erstreckungsebene erstreckt. Ferner umfasst das Fahrwerk eine erste Rolle, eine zweite Rolle sowie eine dritte Rolle, wobei die jeweiligen Rollen voneinander beabstandet auf einer Unterseite der Trägerplatte angeordnet ist. Die Unterseite der Trägerplatte ist bevorzugt diejenige Seite der Trägerplatte, die von einer Oberseite der Trägerplatte abgewandt ist, wobei die zu tragende Last auf der Oberseite der Trägerplatte angeordnet wird. Erfindungsgemäß ist die erste Rolle um eine parallel zur Erstreckungsebene verlaufende erste Rollachse drehbar, während die zweite Rolle um eine parallel zur Erstreckungsebene verlaufende zweite Rollachse drehbar ist und die dritte Rolle um eine parallel zur Erstreckungsebene verlaufende dritte Rollachse drehbar ist. Mit anderen Worten, die jeweilige Rolle kann sich derart drehen, dass das Fahrwerk entlang einer Ebene bzw. entlang eines Untergrundes, auf dem das Fahrwerk angeordnet ist, bewegt werden kann und zwar dadurch, dass sich die jeweilige Rolle um die zugehörige Rollachse dreht. Zudem ist die erste Rolle um eine senkrecht zur Erstreckungsebene verlaufende erste Drehachse an der Trägerplatte drehbar, während die zweite Rollachse um eine senkrecht zur Erstreckungsebene verlaufende zweite Drehachse an der Trägerplatte drehbar ist. Das heißt, dass die erste Rolle und die zweite Rolle jeweils um eine solche zugehörige Drehachse gedreht werden können. Dies führt insbesondere zu einer Drehung der zugehörigen Rollachse relativ zur Trägerplatte, um das Fahrwerk zu lenken. Dahingegen ist die dritte Rolle bezüglich senkrecht zur Erstreckungsebene verlaufender Achsen drehfest an der Trägerplatte angeordnet. Während die erste Rolle und die zweite Rolle also das Lenken des Fahrwerks ermöglichen, ist die dritte Rolle bei einer Lenkbewegung des Fahrwerkes relativ zur Trägerplatte bezüglich senkrecht zur Erstreckungsebene der Trägerplatte verlaufender Achse fixiert, so dass die dritte Rolle für eine Stabilisierung des Fahrwerks sorgt, indem die dritte Rolle das Fahrwerk führt.

Die dritte Rolle ist bevorzugt dauerhaft bzw. permanent bezüglich senkrecht zur Erstreckungsebene verlaufender Achsen drehfest an der Trägerplatte angeordnet. Das heißt insbesondere, dass die dritte Rolle bezüglich der senkrecht zur Erstreckungsebene verlaufenden Achsen nicht lediglich drehfest an der Trägerplatte angeordnet werden kann, beispielsweise mittels einer Feststelleinrichtung und dergleichen, sondern bei gewöhnlichem Gebrauch permanent drehfest ist. Insbesondere weist das Fahrwerk vorzugsweise keine vorgesehene Möglichkeiten zur drehbaren Anordnung der dritten Rolle an der Trägerplatte bezüglich der senkrecht zur Erstreckungsebene verlaufenden Achsen auf.

Das Fahrwerk kann beliebige Lasten tragen und transportieren. Insbesondere kann das Fahrwerk derart ausgebildet und/oder ausgestaltet sein, dass es Lasten mit einem Gewicht von mehreren hundert kg und mehr tragen und transportieren kann.

Grundsätzlich kann das Fahrwerk auch mehr als drei Rollen, insbesondere mehrere Führungsrollen und/oder mehr als zwei Lenkrollen, aufweisen. Zweckmäßig weist das Fahrwerk jedoch lediglich diese drei Rollen, nämlich die erste Rolle, die zweite Rolle und die dritte Rolle, auf. Hierbei kann die jeweilige Rolle als ein Rollkörper ausgebildet sein bzw. einen oder mehrere Rollkörper umfassen. Der jeweilige Rollkörper kann beispielsweise als ein Rad und dergleichen ausgestaltet sein. Insbesondere kann die um die erste Drehachse drehbare erste Rolle und/oder die um die zweite Drehachse drehbare zweite Rolle als eine Lenkrolle ausgestaltet sein. Ferner kann die dritte Rolle als eine ungelenkte Führungsrolle und/oder als eine Bockrolle ausgestaltet sein.

Die jeweilige Drehachse schneidet hierbei die zugehörige Rollachse nicht zwangsläufig. Das heißt, das sowohl Ausführungsformen vorstellbar sind, bei denen die erste Drehachse die erste Rollachse der ersten Rolle schneidet, als auch Ausführungsformen, bei denen die erste Drehachse exzentrisch zur ersten Rollachse verläuft. Entsprechendes gilt für die zweite Drehachse und die zweite Rollachse.

Bei bevorzugten Ausführungsformen sind die erste Rolle und die zweite Rolle in einem Frontbereich der Trägerplatte angeordnet, während die dritte Rolle in einem vom Frontbereich entfernten Heckbereich der Trägerplatte angeordnet ist. Somit kann das Fahrwerk durch eine entsprechende Krafteinwirkung, insbesondere auf den Frontbereich des Fahrwerks, beispielsweise auf die Trägerplatte, vereinfacht gelenkt werden. Ferner dreht sich die erste Rolle um die erste Drehachse und/oder die zweite Rolle um die zweite Drehachse derart, dass die dritte Rollachse und die erste Rollachse und/oder die zweite Rollachse bei einer in Richtung des Frontbereiches erfolgender Vorwärtsfahrt des Fahrwerks und/oder bei einer in Richtung des Heckbereichs erfolgender Rückwärtsfahrt des Fahrwerks parallel angeordnet sind. Eine derartige parallele Anordnung der jeweiligen Rollachse während der Vorwärtsfahrt und/oder der Rückwärtsfahrt erhöht hierbei insbesondere die Stabilität des Fahrwerkes während des Transportes, insbesondere während der Vorwärtsfahrt und/oder der Rückwärtsfahrt.

Ferner können die erste Rolle und die zweite Rolle an der Trägerplatte zwischen der dritten Rolle und einer Deichselhalterung zum Anbringen einer Deichsel angeordnet sein. Die Deichsel bzw. die Deichselhalterung dienen hierbei insbesondere dem Zweck, das Fahrwerk vereinfacht, etwa auf besagter Unterlage, bewegen zu können. Dabei ist die Deichselhalterung vorzugsweise mit der Trägerplatte verbunden, wobei die Deichselhalterung bevorzugt im Frontbereich der Trägerplatte, insbesondere auf einer Frontseite der Trägerplatte, mit der Trägerplatte verbunden ist.

Zweckmäßig ist die Deichselhalterung auf einer Längsmittelachse der Trägerplatte zwischen der ersten Rolle und der zweiten Rolle angeordnet. Hierbei erstreckt sich die Längsmittelachse bevorzugt zwischen dem Frontbereich und dem Heckbereich, wobei die Längsmittelachse der Trägerplatte gewöhnlich der Längsmittelachse des Fahrwerks entspricht. Die Deichselhalterung ist also insbesondere mittig zwischen der ersten Rolle und der zweiten Rolle angeordnet und/oder weist einen gleichen Abstand zur ersten Rolle und zur zweiten Rolle, insbesondere bei paralleler Anordnung der ersten Rolle und der zweiten Rolle bei Vorwärtsfahrt und/oder bei Rückwärtsfahrt, auf. Durch eine solche Anordnung der Deichselhalterung kann die mit Hilfe der Deichselhalterung erfolgte Krafteinwirkung auf das Fahrwerk, insbesondere zum Bewegen und/oder Lenken des Fahrwerks, vereinfacht erfolgen, weil sich diese Kraft auf die Rollen verteilt.

Eine weitere Möglichkeit zur Vereinfachung der Kraftübertragung auf das Fahrwerk besteht darin, die erste Rolle und die zweite Rolle bezüglich der Längsmittelachse symmetrisch auszubilden und/oder anzuordnen. Das heißt insbesondere, dass die erste Rolle und die zweite Rolle insbesondere bei paralleler Ausrichtung der ersten Rollachse und der zweiten Rollachse bezüglich der Längsmittelachse symmetrisch ausgebildet sind. Somit kann beim Lenken des Fahrwerks mittels der Deichselhalterung bzw. der zugehörigen Deichsel eine gleiche Drehbewegung der jeweiligen Rollachse, das heißt der ersten Rollachse und der zweiten Rollachse, um die zugehörige Drehachse, das heißt um die erste Drehachse bzw. um die zweite Drehachse, stattfinden, so dass das Lenken des Fahrwerks vereinfacht wird.

Zudem ist die dritte Rolle bevorzugt mittig zur Längsmittelachse der Trägerplatte angeordnet. Insbesondere kann die dritte Rollachse bezüglich der Längsmittelachse symmetrisch ausgebildet sein. Auch eine derartige Ausbildung bzw. Anordnung der dritten Rolle trägt zu einer verbesserten Handhabung des Fahrwerks bei.

Bei besonders bevorzugten Ausführungsformen ist die Deichselhalterung auf der Längsmittelachse der Trägerplatte zwischen der ersten Rolle und der zweiten Rolle angeordnet, während die erste Rolle und die zweite Rolle bezüglich der Längsmittelachse symmetrisch ausgebildet sind und die dritte Rolle mittig zur Längsmittelachse, insbesondere symmetrisch zur Längsmittelachse, angeordnet ist. Insbesondere verläuft die dritte Rollachse senkrecht zur Längsmittelachse, so dass auch die erste Rollachse und die zweite Rollachse bei Vorwärtsfahrt und/oder bei Rückwärtsfahrt senkrecht zur Längsmittelachse verlaufen können. Eine derartige Ausbildung des Fahrwerks bietet insbesondere den Vorteil, dass das Gewicht der zu tragenden Last auf die jeweiligen Rollen, insbesondere gleichmäßig, verteilt wird. Dadurch werden das Fahrwerk und die Last während des Transports stabilisiert.

Zur weiteren Vereinfachung des Transports der Last kann das Fahrwerk auf der Oberseite der Trägerplatte einen Drehteller zum Auflegen der Last umfassen. Hierbei kann die Last auf dem Drehteller angeordnet und anschließend transportiert werden. Der Drehteller ist vorzugsweise um eine senkrecht zur Erstreckungsebene verlaufende Tellerdrehachse drehbar an der Trägerplatte angeordnet. Das heißt, dass die erste Drehachse und die zweite Drehachse parallel zur Tellerdrehachse verlaufen.

Bei bevorzugten Ausführungsformen ist der Drehteller mittig an der Trägerplatte angeordnet. Das heißt insbesondere, dass der Drehteller exzentrisch zur dritten Rollachse angeordnet ist. Bevorzugt ist der Drehteller bei Vorwärtsfahrt und/oder bei Rückwärtsfahrt mittig zwischen der ersten Rolle und der zweiten Rolle einerseits und der dritten Rolle andererseits angeordnet. Mit anderen Worten, die Tellerdrehachse des Drehtellers ist bei paralleler Anordnung der ersten Rollachse, der zweiten Rollachse und der dritten Rollachse in Vorwärtsfahrt und/oder in Rückwärtsfahrt, bevorzugt jedoch in Vorwärtsfahrt, mittig zwischen der dritten Rollachse und einer die erste Rollachse und die zweite Rollachse umfassenden Achsengeraden angeordnet. Hierdurch wird insbesondere sichergestellt, dass das Gewicht der Last gleichmäßig zwischen der ersten Rolle, der zweiten Rolle und der dritten Rolle verteilt ist.

Prinzipiell kann die Drehung der ersten und der zweiten Rollachse um die zugehörige Drehachse auf beliebige Art und Weise erfolgen. Bevorzugt ist dies dadurch realisiert, dass die erste Rolle an einem ersten Rollenträger drehbar um die erste Rollachse gelagert ist, wobei der erste Rollenträger drehbar um die erste Drehachse an der Trägerplatte gelagert ist. Hierdurch kann die erste Drehachse beabstandet zur ersten Rollachse verlaufen, so dass die erste Drehachse exzentrisch zur ersten Rollachse verläuft. Entsprechendes gilt für die zweite Rolle, welche an einem zweiten Rollenträger drehbar um die zweite Rollachse gelagert sein kann, während der zweite Rollenträger drehbar um die zweite Drehachse an der Trägerplatte gelagert ist. Folglich kann auch die zweite Drehachse exzentrisch zur zweiten Rollachse verlaufen. Bevorzugt weist das Fahrwerk sowohl den ersten Rollenträger als auch den zweiten Rollenträger auf. Dabei kann der jeweilige Rollenträger ein Lager aufweisen, wobei die zugehörige Drehachse durch dieses Lager bestimmt ist. Dieses Lager kann beispielsweise als Kugellager ausgestaltet sein, das eine Drehung um die zugehörige Drehachse gewährleistet.

Die Drehbarkeit der jeweiligen Rolle um die zugehörige Rollachse bzw. das Rollen der jeweiligen Rolle kann im Allgemeinen auf beliebige Art realisiert sein. Weist die jeweilige Rolle einen oder mehrere solche Rollkörper auf, so kann der jeweilige Rollkörper mittels eines zugehörigen Rollkörperlagers drehbar sein. Das jeweilige Rollkörperlager kann insbesondere an einer zugehörigen Rollstange angeordnet sein, die ihrerseits starr ist, so dass die Drehbarkeit der jeweiligen Rolle durch eine Drehung des jeweiligen Rollkörpers um besagte Rollstange, insbesondere mittels eines solchen Rollkörperlagers, realisiert ist. Hierbei sind die jeweilige Rollstange und die zugehörige Rollachse zweckmäßig koaxial.

Bevorzugt ist das Fahrwerk, insbesondere die erste Rolle und die zweite Rolle, derart ausgebildet, dass eine die jeweiligen Drehachse senkrecht schneidende Verbindungsgerade parallel zur dritten Rollachse verläuft. Das heißt insbesondere, dass die erste Rolle und die zweite Rolle entlang der Längsmittelachse zueinander nicht versetzt angeordnet sind. Das heißt insbesondere auch, dass die Verbindungsgerade einen ersten Schnittpunkt der ersten Drehachsen mit der Trägerplatte und einen zweiten Schnittpunkt der zweiten Drehachse mit der Trägerplatte verbindet und im Wesentlichen parallel zur dritten Rollachse verläuft.

Bei bevorzugten Ausführungsformen sind die erste Rolle und die zweite Rolle gleich ausgebildet. Dies führt einerseits zu einer Reduzierung der Herstellungskosten, weil weniger unterschiedliche Teile benötigt werden, und andererseits zu einer besseren Handhabung des Fahrwerkes.

Zweckmäßig ist die Tellerdrehachse auf der Längsmittelachse der Trägerplatte angeordnet. Mit anderen Worten, die Tellerdrehachse schneidet die Längsmittelachse der Trägerplatte. Der Drehteller ist also bevorzugt bezüglich einer senkrecht zur Längsmittelachse verlaufenden Breite der Trägerplatte mittig an der Trägerplatte angeordnet. Dies dient insbesondere der gleichmäßigen Verteilung des Gewichtes der zu tragenden Last auf die Trägerplatte und somit auch auf die jeweilige Rolle.

Um eine besonders stabile Anordnung der dritten Rolle an der Trägerplatte zu erreichen, kann das Fahrwerk auf der Unterseite der Trägerplatte zwei von der dritten Rollachse durchsetzte Wangen umfassen, welche die dritte Rolle einfassen. Das heißt, dass die jeweilige Wange insbesondere senkrecht zur dritten Rollachse verlaufen kann. Hierbei können die Wangen von einer solchen zugehörigen Rollstange der dritten Rolle durchsetzt sein, so dass die Drehbarkeit der dritten Rolle mittels zugehöriger Rollkörper realisiert ist, die zwischen den Wangen angeordnet sind und sich, beispielsweise mit Hilfe zugehöriger Rollkörperlager, um die zugehörige Rollstange drehen, wobei die Rollstange bezüglich der Trägerplatte vorzugsweise starr ist.

Die jeweilige Rolle kann gänzlich unterhalb der Trägerplatte angeordnet sein. Es sind jedoch auch Ausführungsformen vorstellbar, bei denen die jeweilige Rolle die Trägerplatte seitlich überragt. Bevorzugt ist die dritte Rolle gänzlich unterhalb der Trägerplatte an der Trägerplatte angeordnet, während die erste Rolle und/oder die zweite Rolle die Trägerplatte, insbesondere bei paralleler Ausrichtung der Rollachsen, quer zur Längsmittelachse seitlich überragen. Dabei kann zum Beispiel ein solcher zugehöriger Rollkörper die Trägerplatte seitlich überragen.

Die Deichselhalterung ermöglicht es, wie bereits erwähnt, das Fahrwerk mit Hilfe einer Deichsel auf einer Unterlage zu bewegen und/oder zu lenken. Mit Hilfe der Deichsel bzw. der Deichselhalterung wird das Fahrwerk also gefahren. Zur Verbindung der Deichsel mit der Deichselhalterung kann die Deichselhalterung eine quer zur Trägerplatte verlaufende Zunge aufweisen, in die die Deichsel eingehängt bzw. eingerastet werden kann. Zur Einrastung der Deichsel kann die Deichselhalterung ferner Einrastöffnungen aufweisen, in denen zugehörige Vorsprünge, beispielsweise Bolzen, der Deichsel eingreifen können.

Bei bevorzugten Ausführungsformen weist die Deichselhalterung Verbindungsöffnungen auf, durch die eine Verbindungsstange durchgeführt werden kann. Die Verbindungsöffnungen entsprechen vorzugsweise den Einrastöffnungen und sind zweckmäßig an quer zur Längsmittelachse gegenüberliegenden Seiten der Deichselhalterung angeordnet. Die Verbindungsöffnungen dienen dabei dem Zweck, ein solches Fahrwerk mit Hilfe der Verbindungsstange mit einem oder mehreren anderen solchen Fahrwerken zu verbinden. Eine unerwünschte Drehung oder Lenkbewegung des einzelnen Fahrwerks während der Fahrt des Fahrwerks wird durch eine solche Verbindungsstange verhindert, was insbesondere zur einem stabilen Verhalten der so gekoppelten Fahrwerke führt.

Somit wird eine Anordnung aus zumindest zwei solchen Fahrwerken geschaffen, um beispielsweise auch größere Lasten transportieren zu können. Dabei wird die Last an voneinander beabstandeten Bereichen der Last auf das jeweilige Fahrwerk angeordnet, wobei die zuvor erwähnten Vorteile des Fahrwerkes weiterhin ausgenutzt werden können.

Insbesondere kann die Anordnung drei solche Fahrwerke aufweisen, wobei zwei solche Fahrwerke mit Hilfe einer solchen Verbindungsstange miteinander verbunden sind. Die miteinander verbundenen Fahrwerke werden dabei in einem Heckbereich der Anordnung angeordnet, während das andere Fahrwerk in einem Frontbereich der Anordnung angeordnet wird. Somit kann die Krafteinwirkung zum Transportieren der Last auf letzteres Fahrwerk erfolgen, so dass die Vorwärtsfahrt und/oder die Rückwärtsfahrt der Anordnung als auch das Lenken der Anordnung vereinfacht ist.

Es versteht sich, dass die Anordnung auch drei oder vier oder mehrere Fahrwerke umfassen kann, wobei zumindest zwei solche Fahrwerke mittels besagter Verbindungsstange miteinander verbunden sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine räumliche Ansicht eines Fahrwerks,
- Fig. 2: eine Draufsicht auf die Unterseite des Fahrwerks,
- Fig. 3: eine Seitenansicht des Fahrwerks,
- Fig. 4: eine räumliche Ansicht eines Fahrwerks mit einer Deichsel,
- Fig. 5: eine räumliche Ansicht einer Anordnung mit zwei Fahrwerken.

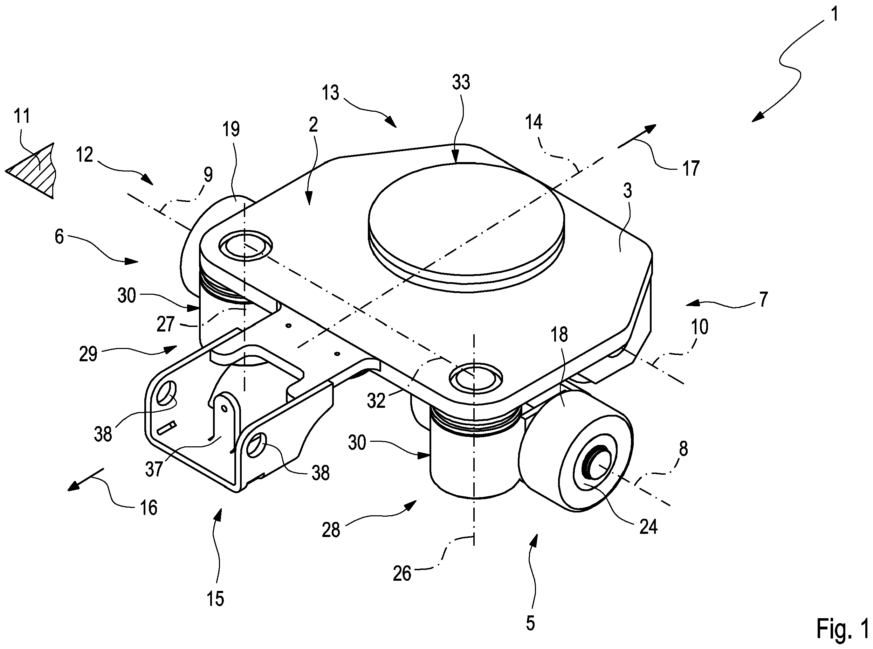

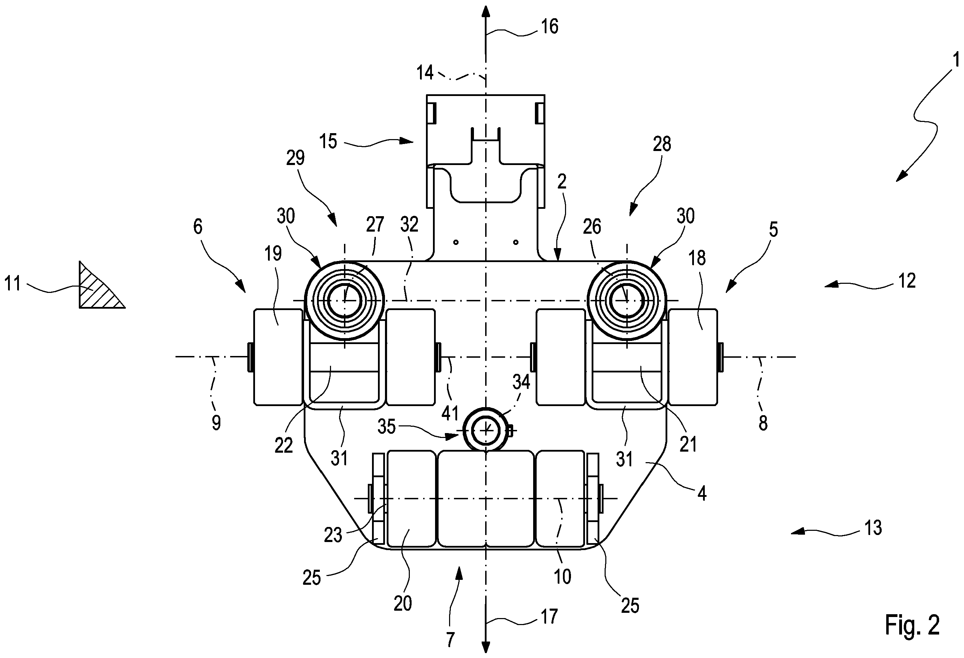

Die Figuren 1 bis 3 zeigen ein Fahrwerk 1 zum Transportieren einer Last aus unterschiedlichen Perspektiven. Hierbei umfasst das Fahrwerk 1 eine Trägerplatte 2, deren Oberseite 3 in Figur 1 und deren von der Oberseite 3 abgewandte Unterseite 4 in Figur 2 zu sehen sind. Das Fahrwerk 1 umfasst des Weiteren an der Unterseite 4 der Trägerplatte 2 eine erste Rolle 5, eine zweite Rolle 6 sowie eine dritte Rolle 7. Dabei ist die erste Rolle 5 um eine erste Rollachse 8 drehbar, während die zweite Rolle 6 um eine zweite Rollachse 9 drehbar ist. Ferner ist die dritte Rolle 7 um eine dritte Rollachse 10 drehbar. Die erste Rollachse 8, die zweite Rollachse 9 sowie die dritte Rollachse 10 verlaufen parallel zu einer Erstreckungsebene 11 der Trägerplatte 2.

Wie insbesondere in Figur 2 zu sehen ist, sind die erste Rolle 5 und die zweite Rolle 6 identisch und als Gleichteile ausgebildet. Dabei sind die erste Rolle 5 und die zweite Rolle 6 in einem Frontbereich 12 des Fahrwerks 1, insbesondere der Trägerplatte 2, angeordnet, während die dritte Rolle 7 in einem Heckbereich 13 des Fahrwerks bzw. der Trägerplatte 2 angeordnet ist. Eine Längsmittelachse 14 des Fahrwerks 1 bzw. der Trägerplatte 2 erstreckt sich zwischen dem Frontbereich 12 und dem Heckbereich 13 der Trägerplatte 2. Wie insbesondere in Figur 2 zu sehen ist, ist die dritte Rolle 7 mittig zur Längsmittelachse 14 angeordnet und symmetrisch zur Längsmittelachse 14 ausgebildet. Ferner sind die erste Rolle 5 und die zweite Rolle 6, insbesondere bei der dargestellten parallelen Anordnung der ersten Rollachse 8 und der zweiten Rollachse 9, symmetrisch zur Längsmittelachse 14 angeordnet.

Das Fahrwerk 1 umfasst ferner eine Deichselhalterung 15, die symmetrisch bezüglich der Längsmittelachse 14 ausgebildet ist und im Frontbereich 12 der Trägerplatte 2 mit der Trägerplatte 2 verbunden ist. Somit ist die Deichselhalterung 15 bezüglich der Längsmittelachse 14 mittig zwischen der ersten Rolle 5 und der zweiten Rolle 6 angeordnet. Das Fahrwerk 1 kann insbesondere mit Hilfe der Deichselhalterung 15 durch eine entsprechende Krafteinwirkung bewegt werden, wobei sich das Fahrwerk 1 bei einer mit einem Pfeil 16 angedeuteten Vorwärtsfahrt in Richtung des Frontbereichs 12 bewegt und bei einer mit einem Pfeil 17 angedeuteten Rückwärtsfahrt in Richtung des Heckbereichs 13 bewegt. Hierbei weist die jeweilige Rolle 5, 6, 7 zugehörige Rollkörper 18, 19, 20 auf, die während der Fahrt des Fahrwerks 1 auf einem entsprechenden Untergrund rollen und sich dabei um die zugehörige Drehachse 8, 9, 10 drehen. Während beim gezeigten Beispiel die erste Rolle 5 zwei erste Rollkörper 18 aufweist und die zweite Rolle 6 zwei zweite Rollkörper 19 aufweist, umfasst die dritte Rolle 10 vier dritte Rollkörper 20.

Wie insbesondere in Figur 2 zu sehen ist, umfasst die jeweilige Rolle 5, 6, 7 zudem eine Rollstange 21, 22, 23, wobei die erste Rolle 5 eine erste Rollstange 21, die zweite Rolle 6 eine zweite Rollstange 22 und die dritte Rolle 7 eine dritte Rollstange 23 umfasst. Hierbei dreht sich der jeweilige Rollkörper 18, 19, 20 um die zugehörige Rollstange 21, 22, 23, so dass die Drehbarkeit der jeweiligen Rolle 5, 6, 7 um die zugehörige Rollachse 8, 9, 10 dadurch realisiert ist, dass sich der jeweilige Rollkörper 18, 19, 20 um die zugehörige Rollstange 21, 22, 23 dreht, während die jeweilige Rollstange 21, 22, 23 koaxial zur zugehörigen Rollachse 8, 9, 10 verläuft, sich jedoch nicht um diese zugehörige Rollachse 8, 9, 10 dreht und in diesem Sinne starr ist. Die Drehbarkeit des jeweiligen Rollkörpers 18, 19, 20 um die zugehörige Rollachse 8, 9, 10 bzw. um die zugehörige Rollstange 21, 22, 23 ist bei der gezeigten Ausführungsform mit einer zum jeweiligen Rollkörper 18, 19, 20 zugehörigen Rollkörperlager 24 realisiert.

Die Trägerplatte 2 ist beim gezeigten Beispiel im Heckbereich 13 schmaler ausgebildet als im Frontbereich 12. Das heißt, dass eine quer zur Längserstreckung 14 verlaufende Breite der Trägerplatte 2 im Heckbereich 13 kleiner ist als im Frontbereich. Im schmalen Frontbereich 13 weist das Fahrwerk 1 zwei Wangen 25 auf, welche senkrecht zur Trägerplatte 2 an der Unterseite der Trägerplatte 2 angeordnet sind und von der dritten Rollstange 23 durchsetzt sind. Hierbei fassen die zwei Wangen 25 die dritte Rolle 7 bzw. die dritten Rollkörper 20 quer zur Längserstreckung 14 der Trägerplatte 2 ein. Somit wird die dritte Rolle 7 beim Transportieren der Last, insbesondere bei Vorwärtsfahrt 16 und/oder bei Rückwärtsfahrt 17 stabilisiert.

Erfindungsgemäß ist die erste Rolle 5 und somit die erste Rollachse 8 um eine erste Drehachse 26 drehbar, während die zweite Rolle 6 und somit die zweite Rollachse 9 um eine zweite Drehachse 27 drehbar ist, wobei die erste Drehachse 26 und die zweite Drehachse 27 senkrecht zur Erstreckungsebene 11 der Trägerplatte 2 verlaufen. Im gezeigten Beispiel verlaufen die jeweiligen Drehachsen 26, 27 exzentrisch zur zugehörigen Rollachse 8, 9. Im Gegensatz zur ersten Rollachse 8 und zur zweiten Rollachse 9 ist die dritte Rollachse 10 und somit die dritte Rolle 7 bezüglich senkrecht zur Erstreckungsebene 11 verlaufender Achsen drehfest an der Trägerplatte 2 angeordnet. Das heißt, dass die Trägerplatte 2 und somit das Fahrwerk 1 mit Hilfe der ersten Rolle 5 und der zweiten Rolle 6 gelenkt werden können.

Die erste Rolle 5 ist mit Hilfe eines ersten Rollenträgers 28 mit der Trägerplatte verbunden, während die zweite Rolle 6 mit Hilfe eines zweiten Rollenträgers 29 mit der Trägerplatte 2 verbunden ist. Der erste Rollenträger 28 und der zweite Rollenträger 29 sind als Gleichteile ausgebildet. Der jeweilige Rollenträger 28, 29 umfasst ein Rollenträgerlager 30 sowie eine mit dem Rollenträgerlager 30 drehfest verbundene U-förmige Halterung 31. Die gegenüberliegenden Schenkel der U-förmigen Halterung 31 werden von der zugehörigen Rollstange 21, 22 der zugehörigen Rolle 5, 6 durchsetzt, die drehfest mit der zugehörigen Halterung 31 verbunden sind. Ferner ist der erste Rollenträger 28 mit Hilfe des zugehörigen Rollenträgerlagers 30 um die erste Rollachse 26 drehbar, während der zweite Rollenträger 29 mit Hilfe des zugehörigen Rollenträgerlagers 30 um die zweite Drehachse 27 drehbar ist. Somit ist die erste Rollachse 8 bzw. die erste Rollstange 21 und somit die erste Rolle 5 um die erste Drehachse 26 drehbar, während die zweite Rollachse 9 bzw. die zweite Rollstange 22 und somit die zweite Rolle 6 um die zweite Drehachse 27 drehbar ist. Hierbei zeigen sämtliche Figuren einen Zustand des jeweiligen Fahrwerks 1 bei Vorwärtsfahrt 16, bei dem die erste Rollachse 8, die zweite Rollachse 9 sowie die dritte Rollachse 10 parallel verlaufen.

Zudem ragt ein solcher erster Rollkörper 18 der ersten Rolle 5 und ein solcher zweiter Rollkörper 19 der zweiten Rolle 6 von der Trägerplatte 2 seitlich hinaus. Aus Figur 2 ist auch ersichtlich, dass eine Verbindungsgerade 32, welche die erste Drehachse 26 und die zweite Drehachse 27 senkrecht schneidet, parallel zur dritten Rollachse 10 verläuft.

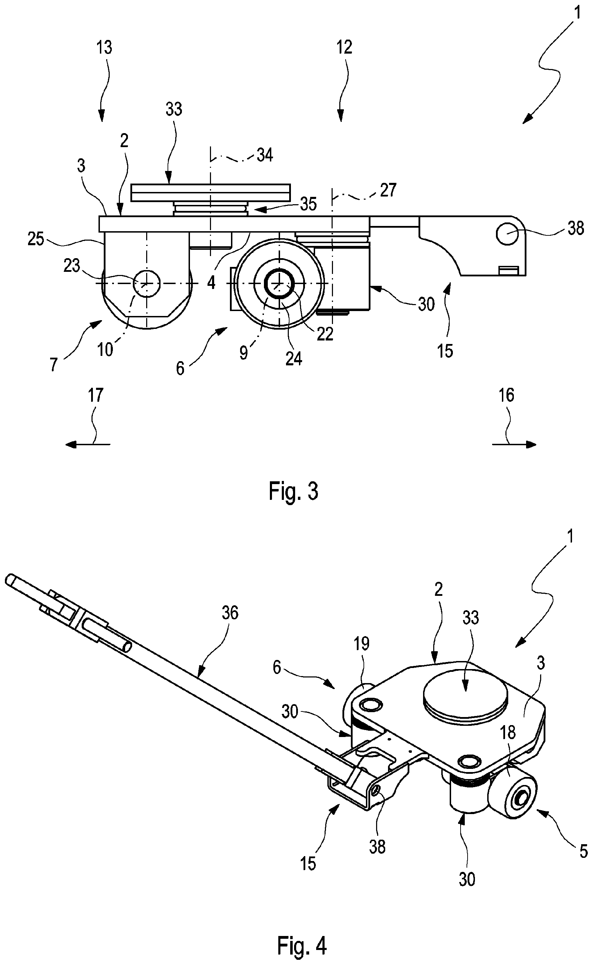

In den Figuren 1 und 3 ist ferner zu sehen, dass das Fahrwerk 1 auf der Oberseite 3 der Trägerplatte 2 einen Drehteller 33 umfasst, auf den die zu tragende Last angeordnet werden kann. Der Drehteller 33 ist um eine senkrecht zur Erstreckungsebene 11 verlaufende Tellerdrehachse 34 drehbar an der Trägerplatte 2 angebracht. Somit verläuft die Tellerdrehachse 34 parallel zur ersten Drehachse 26 und zur zweiten Drehachse 27. Die Drehung des Drehtellers 33 um die Tellerdrehachse 34 ist mit Hilfe eines Drehtellerlagers 35 realisiert, das in der Trägerplatte 2 angeordnet ist. Hierbei verläuft die Tellerdrehachse 34 mittig durch den Drehteller 33. Ferner ist der Drehteller 33, insbesondere das Drehtellerlager 35, derart angeordnet, dass der Drehteller 33 bei Vorwärtsfahrt 16 des Fahrwerks 1 mittig zwischen der ersten Rolle 5 und der zweiten Rolle 6 einerseits und der dritten Rolle 7 andererseits angeordnet ist. Dies ist insbesondere in Figur 3 ersichtlich, bei der der gleiche entlang der Längserstreckung 14 verlaufende Abstand zwischen der Drehtellerachse 34 und der zweiten Rollachse 9 sowie der Drehtellerachse 34 und der dritten Rollachse 10 gut ersichtlich ist. Klar wird dies auch aus Fig. 2, in der zu sehen ist, dass die Drehtellerachse 34 und somit der Drehteller 33 mittig zwischen einer die erste Rollachse 8 und die zweite Rollachse 9 umfassenden Achsengerade 41 und der dritten Rollachse 10 angeordnet ist. Hierdurch wird das Gewicht der zu tragenden Last insbesondere bei Vorwärtsfahrt 16 des Fahrwerks 1 gleichmäßig auf die Rollen 5, 6, 7 verteilt.

In Figur 2 ist zudem zu sehen, dass das Drehtellerlager 35 auf der Längsmittelachse 14 angeordnet ist, wodurch die Drehtellerachse 34 die Längsmittelachse 14 schneidet.

Die Deichselhalterung 15 weist zum Einhaken einer Deichsel 36 (siehe Figur 4) eine Zunge 37 auf, welche senkrecht zur Trägerplatte 2 absteht. Hierdurch kann, wie in Figur 4 gezeigt, eine Deichsel 36 in die Deichselhalterung 15 eingehängt werden, wodurch das Fahrwerk 1 mittels der Deichselhalterung 15 und der Deichsel 36 bewegt und gelenkt werden kann.

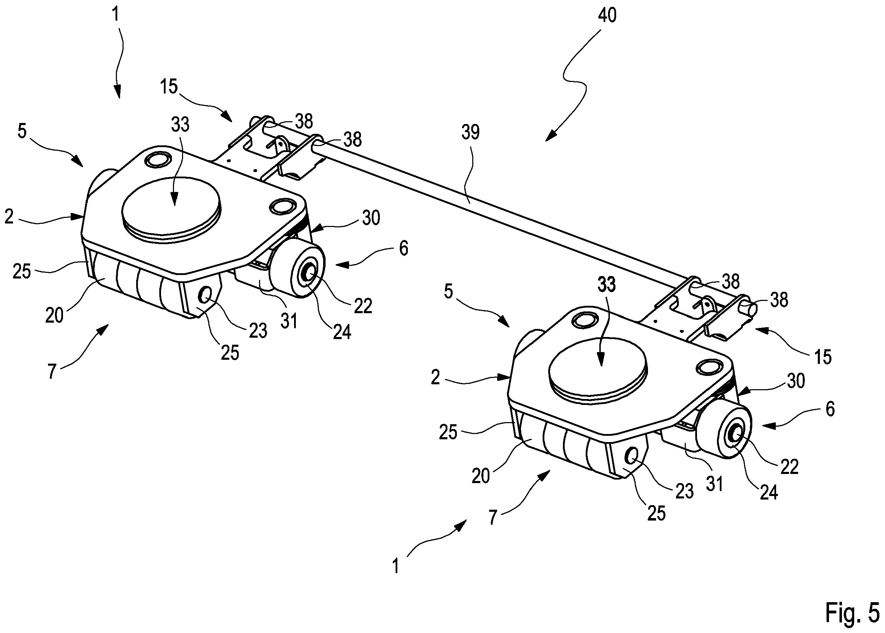

Die Deichselhalterung 15 weist zudem zwei Verbindungsöffnungen 38 auf, die an quer zur Längsmittelachse 14 gegenüberliegenden Seiten der Deichselhalterung 15 angeordnet sind, so dass eine Verbindungsstange 39 (Figur 5) durch sie hindurch geschoben werden kann.

Figur 5 zeigt eine Anordnung 40 mit zwei solchen Fahrwerken 1, die durch die Verbindungsstange 39 miteinander verbunden sind. Dabei ist die Verbindungsstange 39 durch die Verbindungsöffnungen 38 des einen Fahrwerks 1 und durch die Verbindungsöffnungen 38 des anderen Fahrwerks 1 durchgeführt.

## Patentansprüche

1. Fahrwerk (1) zum Transportieren einer Last, mit einer Trägerplatte (2), die sich in einer Erstreckungsebene (11) erstreckt, wobei
- das Fahrwerk (1) auf einer Unterseite (4) der Trägerplatte (2) eine erste Rolle (5) umfasst, die um eine parallel zur Erstreckungsebene (11) verlaufende erste Rollachse (8) drehbar ist,
- das Fahrwerk (1) auf der Unterseite (4) eine von der ersten Rolle (5) beabstandete zweite Rolle (6) umfasst, die um eine parallel zur Erstreckungsebene (11) verlaufende zweite Rollachse (9) drehbar ist,
- das Fahrwerk (1) auf der Unterseite (4) eine von der ersten Rolle (5) und der zweiten Rolle (6) beabstandete dritte Rolle (7) umfasst, die um eine parallel zur Erstreckungsebene (11) verlaufende dritte Rollachse (10) drehbar ist,
- die erste Rolle (5) um eine senkrecht zur Erstreckungsebene (11) verlaufende erste Drehachse (26) an der Trägerplatte (2) drehbar ist,
- die zweite Rolle (6) um eine senkrecht zur Erstreckungsebene (11) verlaufende zweite Drehachse (27) an der Trägerplatte (2) drehbar ist,
- die dritte Rolle (7) bezüglich senkrecht zur Erstreckungsebene (11) verlaufender Achsen drehfest an der Trägerplatte (2) angeordnet ist
- das Fahrwerk (1) lediglich diese drei Rollen (5, 6, 7) aufweist, **dadurch gekennzeichnet,**
**dass** die erste Rolle (5) und die zweite Rolle (6) an der Trägerplatte (2) zwischen der dritten Rolle (7) und einer Deichselhalterung (15) zum Anbringen einer Deichsel (36) angeordnet sind.

2. Fahrwerk nach Anspruch 1,
**dadurch gekennzeichnet,**
**dass** die erste Rolle (5) und die zweite Rolle (6) in einem Frontbereich (12) der Trägerplatte (2) angeordnet sind und die dritte Rolle (7) in einem vom Frontbereich (12) entfernten Heckbereich (13) der Trägerplatte (2) angeordnet ist.

3. Fahrwerk nach Anspruch 1 oder 2,
**dadurch gekennzeichnet,**
**dass** die Deichselhalterung (15) auf einer Längsmittelachse (14) der Trägerplatte (29) zwischen der ersten Rolle (5) und der zweiten Rolle (6) angeordnet ist.

4. Fahrwerk nach einem der Ansprüche 1 bis 3,
**dadurch gekennzeichnet,**
**dass** die dritte Rolle (7) mittig zur Längsmittelachse (14) der Trägerplatte (2) angeordnet ist.

5. Fahrwerk nach einem der Ansprüche 1 bis 4,
**dadurch gekennzeichnet,**
**dass** die erste Rolle (5) und die zweite Rolle (6), insbesondere bei paralleler Ausrichtung, symmetrisch bezüglich der Längsmittelachse (14) ausgebildet sind.

6. Fahrwerk nach einem der Ansprüche 1 bis 5,
**dadurch gekennzeichnet,**
**dass** das Fahrwerk (1) auf der von den Rollen (5, 6, 7) abgewandten Oberseite (3) der Trägerplatte (2) einen Drehteller (33) zum Auflegen einer Last umfasst, der um eine senkrecht zur Erstreckungsebene (11) verlaufende Tellerdrehachse (34) drehbar an der Trägerplatte (2) angeordnet ist.

7. Fahrwerk nach einem der Ansprüche 1 bis 6,
**dadurch gekennzeichnet,**
- **dass** die erste Rolle (5) an einem ersten Rollenträger (28) drehbar um die erste Rollachse (8) gelagert ist, wobei der erste Rollenträger (28) drehbar um die erste Drehachse (26) an der Trägerplatte (2) gelagert ist, und/oder
- **dass** die zweite Rolle (6) an einem zweiten Rollenträger (29) drehbar um die zweite Rollachse (9) gelagert ist, wobei der zweite Rollenträger (29) drehbar um die zweite Drehachse (27) an der Trägerplatte (2) gelagert ist.

8. Fahrwerk nach Anspruch 6,
**dadurch gekennzeichnet,**
**dass** eine die erste Drehachse (26) und die zweite Drehachse (27) senkrecht schneidende Verbindungsgerade (32) im Wesentlichen parallel zur dritten Rollachse (10) verläuft.

9. Fahrwerk nach einem der Ansprüche 6 bis 8,
**dadurch gekennzeichnet,**
**dass** die Tellerdrehachse (34) des Drehtellers (33) bei paralleler Anordnung der ersten Rollachse (8), der zweiten Rollachse (9) und der dritten Rollachse (10) in Vorwärtsfahrt (16) mittig zwischen der dritten Rollachse (10) und einer die erste Rollachse (8) und die zweite Rollachse (9) umfassenden Achsengerade (41) angeordnet ist.

10. Fahrwerk nach einem der Ansprüche 6 bis 9,
**dadurch gekennzeichnet,**
**dass** die Tellerdrehachse (34) die Längsmittelachse (14) der Trägerplatte (2) schneidet.

11. Fahrwerk nach einem der Ansprüche 1 bis 10,
**dadurch gekennzeichnet,**
**dass** das Fahrwerk (1) auf der Unterseite (4) der Trägerplatte (2) zwei von der dritten Rollachse (10) durchsetzte Wangen (25) umfasst, die die dritte Rolle (7) einfassen.

12. Fahrwerk nach einem der Ansprüche 1 bis 11,
**dadurch gekennzeichnet,**
**dass** die erste Rolle (5) und/oder die zweite Rolle (6) die Trägerplatte (2) zumindest bereichsweise quer zur Längsmittelachse (14) seitlich überragt.

13. Fahrwerk nach einem der Ansprüche 1 bis 12,
**dadurch gekennzeichnet,**
**dass** die Deichselhalterung (15) Verbindungsöffnungen (38) zum Durchführen einer Verbindungsstage (39) aufweist.

14. Anordnung (40) mit zumindest zwei Fahrwerken (1) nach einem der Ansprüche 1 bis 13, wobei zumindest zwei solche Fahrwerke (1) durch eine Verbindungsstange (39) miteinander verbunden sind.

## Claims

1. Rolling gear (1) for transporting a load, with a support plate (2) which extends in an extension level (11), wherein
- the rolling gear (1) comprises on a bottom side (4) of the support plate (2) a first roller (5) which is rotatable around a first roll axis (8) extending parallel to the extension level (11),
- the rolling gear (1) comprises on the bottom side (4), distanced from the first roller (5), a second roller (6), which is rotatable around a second roll axis (9) extending parallel to the extension level (11),
- the rolling gear (1) comprises on the bottom side (4), distanced from the first roller (5) and the second roller (6), a third roller (7), which is rotatable around a third roll axis (10) extending parallel to the extension level (11),
- the first roller (5) is rotatable around a first rotational axis (26) at the support plate (2) extending perpendicularly to the extension level (11),
- the second roller (6) is rotatable around a second rotational axis (27) at the support plate (2) extending perpendicularly to the extension level (11),
- the third roller (7) is disposed at the support plate (2) non-rotatably with respect to axes extending perpendicularly to the extension level (11)
- the rolling gear (1) has only these three rollers (5, 6, 7),
**characterised in that**
the first roller (5) and the second roller (6) are disposed at the support plate (2) between the third roller (7) and a steering bar holder (15) for mounting a steering bar (36).

2. Rolling gear according to claim 1, **characterised in that** the first roller (5) and the second roller (6) are disposed in front region (12) of the support plate (2) and the third roller (7) is disposed in a back region (13) of the support plate (2) distanced from the front region (12).

3. Rolling gear according to claim 1 or 2, **characterised in that** the steering bar holder (15) is disposed on a longitudinal central axis (14) of the support plate (29) between the first roller (5) and the second roller (6).

4. Rolling gear according to one of claims 1 to 3, **characterised in that** the third roller (7) is disposed centrally to the longitudinal central axis (14) of the support plate (2).

5. Rolling gear according to one of claims 1 to 4, **characterised in that** the first roller (5) and the second roller (6), in particular in parallel alignment, are formed symmetrically with respect to the longitudinal central axis (14).

6. Rolling gear according to one of claims 1 to 5 **characterised in that** the rolling gear (1) on the upper side (3) of the support plate (2) facing away from the rollers (5, 6, 7) comprises, for the upon-placing of a load, a rotating plate (33) which is disposed at the support plate (2) rotatably around a plate rotation axis (34) extending perpendicularly to the extension level (11).

7. Rolling gear according to one of claims 1 to 6, **characterised in that**
- the first roller (5) is mounted at a first roller holder (28) rotatably around the first roll axis (8), wherein the first roller holder (28) is mounted at the support plate (2) rotatably around the first rotational axis (26), and/or
- that the second roller (6) is mounted at a second roller holder (29) rotatably around the second roll axis (9), wherein the second roller holder (29) is mounted at the support plate (2) rotatably around the second rotational axis (27).

8. Rolling gear according to claim 6, **characterised in that** a straight connecting line (32) bisecting perpendicularly the first rotational axis (26) and the second rotational axis (27) extends substantially parallel to the third roll axis (10).

9. Rolling gear according to one of claims 6 to 8, **characterised in that** the plate rotation axis (34) of the rotating plate (33) during parallel disposition of the first roll axis (8), the second roll axis (9) and the third roll axis (10) in forward drive (16) is disposed centrally between the third roll axis (10) and an axis straight line (41) comprising the first roll axis (8) and the second roll axis (9).

10. Rolling gear according to one of claims 6 to 9, **characterised in that** the plate rotation axis (34) bisects the longitudinal central axis (14) of the support plate (2).

11. Rolling gear according to one of claims 1 to 10, **characterised in that** the rolling gear (1) on the bottom side (4) of the support plate (2) comprises two side pieces (25), penetrated by the third roll axis (10), which enclose the third roller (7).

12. Rolling gear according to one of claims 1 to 11, **characterised in that** the first roller (5) and/or the second roller (6) protrudes laterally beyond the support plate (2) at least sectionally perpendicularly to the longitudinal central axis (14).

13. Rolling gear according to one of claims 1 to 12, **characterised in that** the steering bar holder (15) has connection openings (38) for inserting a link stage (39).

14. Apparatus (40) with at least two rolling gears (1) according to one of claims 1 to 13, wherein at least two such rolling gears (1) are connected with one another with a link rod (39).

## Revendications

1. Support (1) pour le transport d'une charge, avec une plaque porteuse (2) qui s'étend dans un plan d'extension (11), dans lequel
- le support (1) comporte sur un côté inférieur (4) de la plaque porteuse (2) une première roulette (5) qui peut être tournée autour d'un premier axe de roulement (8) s'étendant parallèlement au plan d'extension (11),
- le support (1) comporte sur le côté inférieur (4) une deuxième roulette (6) espacée de la première roulette (5) qui peut être tournée autour d'un second axe de roulement (9) s'étendant parallèlement au plan d'extension (11),
- le support (1) comporte sur le côté inférieur (4) une troisième roulette (7) espacée de la première roulette (5) et de la deuxième roulette (6) qui peut être tournée autour d'un troisième axe de roulement (10) s'étendant parallèlement au plan d'extension (11),
- la première roulette (5) peut être tournée autour d'un premier axe de rotation (26) s'étendant perpendiculairement au plan d'extension (11) au niveau de la plaque porteuse (2),
- la deuxième roulette (6) peut être tournée autour d'un second axe de rotation (27) s'étendant perpendiculairement au plan d'extension (11) au niveau de la plaque porteuse (2),
- la troisième roulette (7) est agencée par rapport à des axes s'étendant perpendiculairement au plan d'extension (11) sans pouvoir tourner au niveau de la plaque porteuse (2),
- le support (1) présente juste ces trois roulettes (5, 6, 7),
**caractérisé en ce que**
la première roulette (5) et la deuxième roulette (6) sont agencées au niveau de la plaque porteuse (2) entre la troisième roulette (7) et un support de timon (15) pour le montage d'un timon (36).

2. Support selon la revendication 1,
**caractérisé en ce**
**que** la première roulette (5) et la deuxième roulette (6) sont agencées dans une zone avant (12) de la plaque porteuse (2) et la troisième roulette (7) est agencée dans une zone arrière (13) éloignée de la zone avant (12) de la plaque porteuse (2).

3. Support selon la revendication 1 ou 2,
**caractérisé en ce**
**que** le support de timon (15) est agencé sur un axe médian longitudinal (14) de la plaque porteuse (29) entre la première roulette (5) et la deuxième roulette (6).

4. Support selon l'une quelconque des revendications 1 à 3,
**caractérisé en ce**
**que** la troisième roulette (7) est agencée au milieu de l'axe médian longitudinal (14) de la plaque porteuse (2).

5. Support selon l'une quelconque des revendications 1 à 4,
**caractérisé en ce**
**que** la première roulette (5) et la deuxième roulette (6), en particulier en cas d'orientation parallèle, sont réalisées de manière symétrique par rapport à l'axe médian longitudinal (14).

6. Support selon l'une quelconque des revendications 1 à 5,
**caractérisé en ce**
**que** le support (1) comporte sur le côté supérieur (3) éloigné des roulettes (5, 6, 7) de la plaque porteuse (2) un plateau tournant (33) pour le placement d'une charge qui est agencé de manière à pouvoir tourner autour d'un axe de rotation de plateau (34) s'étendant perpendiculairement au plan d'extension (11) au niveau de la plaque porteuse (2).

7. Support selon l'une quelconque des revendications 1 à 6,
**caractérisé en ce**
- **que** la première roulette (5) est logée au niveau d'un premier support de roulette (28) de manière à pouvoir tourner autour du premier axe de roulement (8), dans lequel le premier support de roulette (28) est logé de manière à pouvoir tourner autour du premier axe de rotation (26) au niveau de la plaque porteuse (2), et/ou
- **que** la deuxième roulette (6) est logée au niveau d'un second support de roulette (29) de manière à pouvoir tourner autour du second axe de roulement (9), dans lequel le second support de roulette (29) est logé de manière à pouvoir tourner autour du second axe de rotation (27) au niveau de la plaque porteuse (2).

8. Support selon la revendication 6,
**caractérisé en ce**
**qu'**une droite de raccordement (32) coupant perpendiculairement le premier axe de rotation (26) et le second axe de rotation (27) s'étend sensiblement parallèlement au troisième axe de roulement (10).

9. Support selon l'une quelconque des revendications 6 à 8,
**caractérisé en ce**
**que** l'axe de rotation de plateau (34) du plateau tournant (33) en cas d'agencement parallèle du premier axe de roulement (8), du deuxième axe de roulement (9) et du troisième axe de roulement (10) est agencé en marche avant (16) au milieu entre le troisième axe de roulement (10) et une droite d'axes (41) comprenant le premier axe de roulement (8) et le deuxième axe de roulement (9).

10. Support selon l'une quelconque des revendications 6 à 9,
**caractérisé en ce**
**que** l'axe de rotation de plateau (34) coupe l'axe médian longitudinal (14) de la plaque porteuse (2).

11. Support selon l'une quelconque des revendications 1 à 10,
**caractérisé en ce**
**que** le support (1) comporte sur le côté inférieur (4) de la plaque porteuse (2) deux joues (25) traversées par le troisième axe de roulement (10) qui bordent la troisième roulette (7).

12. Support selon l'une quelconque des revendications 1 à 11,
**caractérisé en ce**
**que** la première roulette (5) et/ou la deuxième roulette (6) dépasse latéralement de la plaque porteuse (2) au moins par endroits transversalement à l'axe médian longitudinal (14).

13. Support selon l'une quelconque des revendications 1 à 12,
**caractérisé en ce**
**que** le support de timon (15) présente des ouvertures de raccordement (38) pour le passage d'une tige de raccordement (39).

14. Agencement (40) avec au moins deux supports (1) selon l'une quelconque des revendications 1 à 13, dans lequel au moins deux tels supports (1) sont raccordés l'un à l'autre par une tige de raccordement (39).
